Europäisches Patentamt

European Patent Office

Office européen des brevets

(11) Veröffentlichungsnummer: **0 222 267**
**A1**

# (12) EUROPÄISCHE PATENTANMELDUNG

(21) Anmeldenummer: 86115063.9

(22) Anmeldetag: 30.10.86

(51) Int. Cl.⁴: **G 01 P 3/80**
**G 01 S 11/00**

(30) Priorität: 09.11.85 DE 3539793

(43) Veröffentlichungstag der Anmeldung:
20.05.87 Patentblatt 87/21

(84) Benannte Vertragsstaaten:
AT BE CH DE GB LI

(71) Anmelder: BROWN,BOVERI & CIE Aktiengesellschaft
Kallstadter Strasse 1
D-6800 Mannheim 31(DE)

(72) Erfinder: Krüger, Gerald, Dr. Ing.
Peter Böhm-Strasse 17
D-6904 Eppelheim(DE)

(74) Vertreter: Kempe, Wolfgang, Dr. et al,
c/o BROWN, BOVERI & CIE AG ZPT Postfach 351
D-6800 Mannheim 31(DE)

(54) Verfahren zur berührungslosen Geschwindigkeits- und Längenmessung.

(57) Es wird ein Verfahren zur berührungslosen Geschwindigkeits- und Längenmessung an sich im wesentlichen linear
bewegendem Meßgut mit statistisch gemusterter Oberfläche, insbesondere an stranggegossenem Material, angegeben. Hierfür werden zwei in Bewegungsrichtung des
Meßgutes hintereinander angeordnete, auf die Meßgutoberfläche gerichtete Detektoren verwendet, die im wesentlichen
statistisch identische, zeitlich gegeneinander phasenverschobene Signale aufnehmen. Der Betrag der Phasenverschiebung hängt von dem Abstand der Detektoren und der
Geschweindigkeit des Meßgutes ab. Als Detektoren dienen
elektronische Kameras (10), deren Bilder derart ausgewertet
werden, daß die zu einem Meßzyklusbeginn binärisiert
abgespeicherte Bildinformation eines ersten Kamerabilddausschnittes (I) mit der binärisierten Bildinformation eines
zweiten Kamerabildausschnittes (II) laufend verglichen werden. Es wird die Zeit (t) zwischen Meßzyklusbeginn und Auftreten eines hohen Maßes an Übereinstimmung der einze-
Inen Bildpunkte in beiden Kamerabildausschnitten (I,II)
ermittelt. Hieraus lassen sich die Geschwindigkeit und die
Länge des Meßgutes bestimmen.

Fig. 1

BROWN, BOVERI & CIE     AKTIENGESELLSCHAFT
Mannheim                           07. Nov. 1985
Mp.Nr. 643/85                      ZPT/P2-La/Fo

Verfahren zur berührungslosen Geschwindigkeits- und Längenmessung

Die Erfindung bezieht sich auf ein Verfahren zur berührungslosen Geschwindigkeits- und Längenmessung an sich im wesentlichen linear bewegendem Meßgut mit statistisch gemusterter Oberfläche, insbesondere an stranggegossenem Material, wobei zwei in Bewegungsrichtung hintereinander angeordnete, auf die Oberfläche gerichtete Detektoren zwei im wesentlichen statistisch identische, zeitlich gegeneinander um einen von dem gegenseitigen Abstand der Detektoren und der Geschwindigkeit des Meßgutes abhängigen Betrag phasenverschobene Signale aufnehmen.

Ein derartiges Verfahren ist durch die DE-OS 22 53 138 bekanntgeworden. Zur Ermittlung der Geschwindigkeit bedient sich das bekannte Verfahren der Korrelationsmethode. Diese Methode erfordert einen erheblichen Rechenaufwand. Zur Begrenzung des Rechenaufwandes werden relativ wenig optische Informationen der Meßgutoberfläche registriert und abgespeichert. Dies führt jedoch zu einer Störanfälligkeit gegen teilweise Sichtunterbrechung des Sensors durch Dampf-, Wasserspritzer und dergleichen.
Eine ausreichend und dauerhafte Sicherheit bei der Erfassung der Meßwerte ist damit bei ungünstigen, anlagenüblichen Randbedingungen nicht gegeben.

Aufgabe der Erfindung ist es, ein Verfahren gemäß dem
Oberbegriff anzugeben, das einen vergleichsweise geringen Aufwand bei der Datenauswertung erfordert und eine
verminderte Störanfälligkeit gegen Sichtunterbrechung
aufweist aufgrund einer erhöhten Informationsdichte von
der gewünschten Prozeßgröße (Strangbewegung).

Die Aufgabe wird dadurch gelöst, daß als Detektoren
elektronische Kameras mit definiertem, zweidimensionalem
Bildausschnitt verwendet werden, deren Bilder derart
ausgewertet werden, daß die zu einem Meßzyklusbeginn
binärisiert abgespeicherte Bildinformation des ersten
Detektors laufend mit binärisierten Bildinformationen
des zweiten Detektors unmittelbar verglichen werden, und
daß der Zeitablauf bis zum Auftreten eines hohen Maßes
an Übereinstimmung der einzelnen Bildpunkte beider Detektoren gemessen wird. Der erforderliche Grad der Übereinstimmung kann beispielsweise durch Vorgabe eines bestimmten Prozentsatzes an übereinstimmenden Bildinformationen (Bildpunkte) festgelegt werden.

Einer bevorzugten Ausführung der Erfindung zufolge wird
der zeitliche Verlauf des Grades der Übereinstimmung der
einzelnen Bildpunkte registriert und der Betrag der
zeitlichen Phasenverschiebung der Signale durch Ermittlung des Maximums der Übereinstimmung bestimmt. Natürlich kann auch statt des Maximums der Übereinstimmung
das Minimum der Nichtübereinstimmung in Betracht gezogen
werden.

Durch den geringen Rechenaufwand ermöglicht das erfindungsgemäße Verfahren kurze Meßzyklen, so daß insbesondere die Meßdaten der Geschwindigkeit kurzfristig verfügbar sind. Ferner kann der Zeitabstand zwischen zwei Messungen sehr kurz gehalten werden. Wegen der hohen Informationsdichte, der geringen Meßzeiten und der hohen Bildauflösung ergibt sich eine hohe Redundanz, die sich insbesondere bei anlagenbedingten Sichtunterbrechungen des Sensors vorteilhaft auswirkt. Eine Anfangs-/Ende-Erkennung des Meßgutes ist ebenfalls gewährleistet. Die Eichung des Systems ist einfach und wiederholbar.

Der Abstand zwischen Meßgut und Sensor und der Anbauort des Sensors sind in weiten Grenzen frei wählbar, so daß ein guter Systemschutz für den Sensor ermöglicht wird. Es können industrieerprobte Sensoren, wie Industrie-TV-Röhrenkameras oder Halbleiterkameras eingesetzt werden. Ein spezieller Meßkopfschutz ist entbehrlich. Ferner ist eine Anpassung an die örtlichen Geometrie- und Beleuchtungsverhältnisse durch optische (Blende, Schärfe, Brennweite) und/oder elektronische Einstellungen möglich.

In vorteilhafter Weise dienen als Detektoren zwei Bildausschnitte eines Kamerabildes, so daß für die Durchführung des Verfahrens lediglich eine elektronische Kamera erforderlich ist. Die Festlegung der Bildausschnitte erfolgt mittels eines Bildrechners (Bildauswerteelektronik).

Es kann auch vorteilhaft sein, mehrere Bildfensterpaare mit einer oder mehreren Kameras zu bilden, die durch zweckmäßige Wahl der Bildfenstergröße und Bildfensterabstände zur Erhöhung der Genauigkeit durch Unterdrückung systematischer Fehler beitragen. Die Auswertung der Informationen aller Bildfensterpaare kann durch einen gemeinsamen Bildrechner erfolgen.

Eine weitere Verbesserung der Meßgenauigkeit durch Reduzierung systematischer Meßfehler kann vorteilhaft durch elektronische Variation des Bildfeldabstandes oder durch Vibration der Kamera bei schwingender Aufhängung der Kamera eingestellt werden.

In zweckmäßiger Weise kann zur Strukturoptimierung die Bildunschärfe der Kamera automatisch nachgestellt werden. Hierdurch lassen sich die Größenverhältnisse der Bildstrukturen beeinflussen. Bei unscharfer Einstellung werden die Strukturpunkte größer, so daß feingliedrige Strukturen zu zusammenhängenden Flächen verschmelzen. Die so gebildeten gröberen Bildstrukturen führen bei der Bildauswertung zu besseren Ergebnissen als feingliedrig strukturierte Bilder. Die Feingliedrigkeit der Bildstruktur kann durch den Bildrechner ermittelt und zur automatischen Einstellung der Bildschärfe herangezogen werden.

Anhand der Zeichnung, in der ein Ausführungsbeispiel der Erfindung gezeigt ist, sollen die Erfindung sowie weitere vorteilhafte Ausgestaltungen und Weiterbildungen näher erläutert und beschrieben werden.

Es zeigt:

Fig. 1    eine Kamera, die einen Bildausschnitt eines Stranges erfaßt und

Fig. 2    den Bildausschnitt mit zwei Bildfenstern.

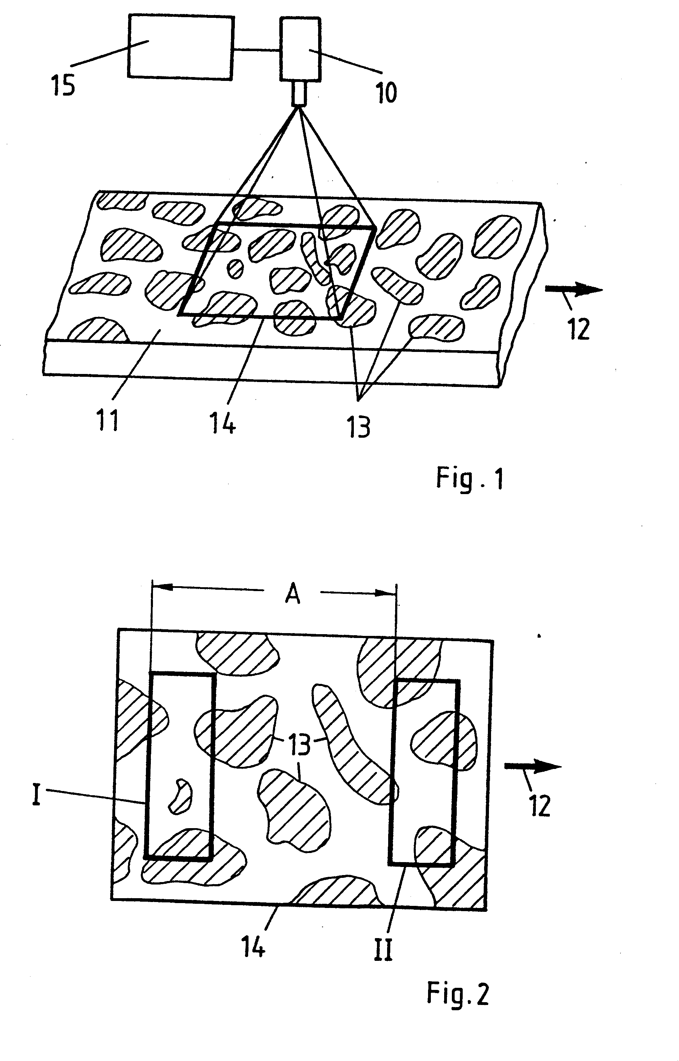

Gemäß Figur 1 ist eine elektronische Kamera 10 auf die Oberfläche eines Stranges 11 (z.B. Knüppel oder Block) ausgerichtet. Der perspektivisch dargestellte Strang 11 wird linear in Pfeilrichtung 12 unter der Kamera 10 vorbeibewegt. Die Oberfläche des glühenden Stranges 11 zeigt dunkel erscheinende Strukturen 13, die durch Zunder auf der Oberfläche entstehen und sich während des Vorbeifahrens unter der Kamera 10 nicht ändern. Die Strukturen 13 sind unregelmäßig in Größe und Form und über der Oberfläche statistisch verteilt.

Die Kamera 10 nimmt einen rechteckigen Bildausschnitt 14 der Strangoberfläche auf, der in Figur 2 in Aufsicht dargestellt ist. Der Bildausschnitt ist in beispielsweise 400 x 256 Bildpunkte unterteilt.

Die Kamera 10 nimmt in kurzen, regelmäßigen Zeitintervallen (z.B. alle 20 ms) Bilder der Strangoberfläche auf. Die Bilder werden binärisiert abgespeichert, d.h. Bildpunkte, deren Helligkeit einen vorgebbaren Wert überschreitet, werden als "weiß" und die übrigen Bildpunkte als "schwarz" klassifiziert.

In dem Bildausschnitt 14 der Kamera 10 sind zwei in Meßgutbewegungsrichtung 12 hintereinanderliegende Bildfenster I,II definiert, die einen bekannten Abstand A (z.B. 0,1 bis 0,5 m) zueinander aufweisen. Beide Bildfenster I,II sind rechteckig und haben die gleichen Abmessungen. Sie enthalten somit die gleiche Anzahl von Bildpunkten.

Die Definition der Bildfenster erfolgt in einem
Bildrechner 15, der die Bildsignale der Kamera 10 auswertet.

Die Auswertung erfolgt in der Weise, daß zu einem Meßzyklusbeginn der Bildausschnitt in Bildfenster I erfaßt
und binärisiert abgespeichert wird. Der Speicher enthält
somit die Information über die aktuelle Oberflächenstruktur zum Meßzyklusbeginn. In regelmäßigen Zeitabständen (z.B. 20 ms) werden erneut Bilder aufgenommen.
Der in Bildfenster II erscheinende Bildausschnitt wird
dabei jedes Mal während der Aufnahme in binärisierter
Form mit den abgespeicherten Bildern des Bildfensters I
verglichen. Bei Übereinstimmung der Bildinformationen
aus Bildfenster II mit dem Bildfenster I wird der Zeitabschnitt t zwischen Meßzyklusbeginn und Zeitpunkt der
Übereinstimmung ermittelt.

Die in dem Zeitabschnitt t durchlaufende Stranglänge ist
gleich dem bekannten Bildfensterabstand A. Die mittlere
Geschwindigkeit (z.B. V = 0 ... 3m/min) ergibt sich aus
dem Quotienten des Bildfensterabstandes A und dem Zeitabschnitt t.

Mit der Ermittlung des Zeitabschnittes t ist ein Meßzyklus beendet. Der nächste Meßzyklus kann schon vor dem
Ende des vorangegangenen beginnen. Wie viele Meßzyklen
gleichzeitig aber zeitversetzt ablaufen können, hängt
von der Speicherkapazität des Bildrechners 15 ab. Theoretisch kann mit jeder Bildaufnahme (Zeitabstände z.B.
20 ms) ein neuer Meßzyklus beginnen.

Zur Berechnung der durchlaufenden Gesamtlänge des Stranges werden die Einzellängen sich unmittelbar aneinander
anschließender Meßzyklen aufaddiert.

Die Übereinstimmung der Bildinformationen der Bildfenster I und II wird vorzugsweise durch segnentiellen Vergleich aller örtlich korrespondierender Einzelpunkte beider Bilder überprüft. Während des Vergleichs wird ein neues Bild nach folgenden Kriterien (exklusiv ODER) erzeugt:

Waren die korrespondierenden Bildpunkte beide schwarz oder beide weiß, wird der erzeugte Bildpunkt schwarz, war einer der korrespondierenden Bildpunkte weiß und der andere schwarz, dann wird der erzeugte Bildpunkt weiß. Die Anzahl der weißen Bildpunkte des erzeugten Bildes wird mitlaufend aufsummiert (Flächenberechnung). Ihre Summe ist ein Maß für die Übereinstimmung der Ursprungsbilder (kleine Summe gleich gute Übereinstimmung).

Der zu jeder neuen Bildaufnahmezeit gehörende Summenwert wird gespeichert. Wurde ein ausgeprägtes Minimum des Summenwertes festgestellt, dann hat sich das bei Bildfenster I abgespeicherte Bild zwischenzeitlich zum Bildfenster II bewegt, d.h. die durchlaufende Materiallänge ist gleich dem bekannten Bildfensterabstand A.

## A n s p r ü c h e

1. Verfahren zur berührungslosen Geschwindigkeits- und Längenmessung an sich im wesentlichen linear bewegendem Meßgut mit statistisch gemusterter Oberfläche, insbesondere an stranggegossenem Material, wobei zwei in Bewegungsrichtung hintereinander angeordnete, auf die Oberfläche gerichtete Detektoren zwei im wesentlichen statistisch identische, zeitlich gegeneinander um einen von dem gegenseitigen Abstand der Detektoren und der Geschwindigkeit des Meßgutes abhängigen Betrag phasenverschobene Signale aufnehmen, dadurch gekennzeichnet, daß als Detektoren elektronische Kameras (10) mit definiertem, zweidimensionalem Bildausschnitt (14) verwendet werden, deren Bilder derart ausgewertet werden, daß die zu einem Meßzyklusbeginn binärisiert abgespeicherte Bildinformation des ersten Detektors laufend mit binärisierten Bildinformationen des zweiten Detektors verglichen werden, und daß der Zeitablauf (t) bis zum Auftreten eines hohen Maßes an Übereinstimmung der einzelnen Bildpunkte beider Detektoren gemessen wird.

2. Verfahren nach Anspruch 1, dadurch gekennzeichnet, daß der zeitliche Verlauf des Grades der Übereinstimmung der einzelnen Bildpunkte registriert wird und der Betrag der zeitlichen Phasenverschiebung der Signale durch Ermittlung des Maximus der Übereinstimmung bestimmt wird.

3. Verfahren nach Anspruch 1 oder 2, dadurch gekennzeichnet, daß als Detektoren zwei Bildausschnitte (I,II) eines Kamerabildes (14) dienen.

**0222267**

4. Verfahren nach einem der Ansprüche 1 bis 3, dadurch gekennzeichnet, daß zur Auswertung der Geschwindigkeits- und Längenmessung mehrere Bildfensterpaare herangezogen werden.

5. Verfahren nach einem der Ansprüche 1 bis 4, dadurch gekennzeichnet, daß die Bildunschärfe der Kamera (10) automatisch nachgestellt wird, so daß die Größenverhältnisse der Bildstrukturen für die Auswertung optimiert werden.

6. Verfahren nach einem der Ansprüche 1 bis 5, dadurch gekennzeichnet, daß der Bildfeldabstand automatisch elektrisch von Meßzyklus zu Meßzyklus variiert wird.

7. Verfahren nach einem der Ansprüche 1 bis 6, dadurch gekennzeichnet, daß die Kamera in Strangbewegungsrichtung Vibrationen ausführt.

0222267

Fig . 1

Fig.2

## Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 110 828 (ENDRESS UND HAUSER) <br> * Figuren 1-5,8; Seite 12, Zeile 1 - Seite 17, Zeile 22; Seite 21, Zeile 27 - Seite 22, Zeile 24; Seite 24, Zeile 28 - Seite 27, Zeile 31; Seite 31, Zeilen 9-16 * <br> --- | 1-4,6 | G 01 P 3/80 <br> G 01 S 11/00 |
| X | US-A-4 162 509 (KENNETH D.ROBERTSON) <br> * Figur; Spalte 3, Zeile 3 - Spalte 4, Zeile 66 * <br> ----- | 1,2 | |

**RECHERCHIERTE SACHGEBIETE (Int. Cl 4)**

G 01 P
G 01 S

Der vorliegende Recherchenbericht wurde für alle Patentansprüche erstellt

| Recherchenort | Abschlußdatum der Recherche | Prüfer |
|---|---|---|
| DEN HAAG | 21-01-1987 | CANNARD J.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument